# EUROPEAN PATENT SPECIFICATION

(11) **EP 3 209 146 B1**
(45) Date of publication and mention of the grant of the patent: **20.05.2020**
(21) Application number: 15852283.9
(22) Date of filing: 20.10.2015
(51) Int. Cl.: A23L 27/12, A23L 27/00, A23L 2/56, A23L 29/10

(54) **FLAVOR NANOEMULSIONS AND METHODS OF PREPARING THE SAME**
GESCHMACKSNANOEMULSIONEN UND VERFAHREN ZUR HERSTELLUNG DAVON
NANOÉMULSIONS D'ARÔMES ET LEURS PROCÉDÉS DE PRÉPARATION

(30) Priority: 20.10.2014 US 201462065865 P; 28.07.2015 US 201562197919 P
(43) Date of publication of application: 30.08.2017
(73) Proprietor: International Flavors & Fragrances Inc., New York, NY 10019 (US)
(72) Inventor: LEE, Daniel Kaiping, Morganville, New Jersey 07751 (US); WANG, Chii-Fen, Princeton, New Jersey 08540 (US); YANG, Ying, Holmdel, New Jersey 07733 (US); VACCARI, Daniel, 05138-200 Jardim Líbano - Pirituba, São Paulo (BR)
(74) Representative: AWA Sweden AB
(86) International application number: PCT/US2015/056470
(87) International publication number: WO 2016/064883

(56) References cited:
- JP-A- 2008 212 107
- US-A1- 2002 187 238
- US-A1- 2009 196 972
- US-A1- 2009 285 952
- US-A1- 2010 136 175
- US-A1- 2011 275 592
- US-A1- 2013 004 621
- US-A1- 2013 064 954
- HUAIQIONG CHEN ET AL: "Microemulsions Based on a Sunflower Lecithin-Tween 20 Blend Have High Capacity for Dissolving Peppermint Oil and Stabilizing Coenzyme Q 10", JOURNAL OF AGRICULTURAL AND FOOD CHEMISTRY, vol. 63, no. 3, 13 January 2015 (2015-01-13), pages 983-989, XP055453056, ISSN: 0021-8561, DOI: 10.1021/jf504146t
- JIAJIA RAO ET AL: "Optimization of lipid nanoparticle formation for beverage applications: Influence of oil type, cosolvents, and cosurfactants on nanoemulsion properties", JOURNAL OF FOOD ENGINEERING, vol. 118, no. 2, 21 April 2013 (2013-04-21), pages 198-204, XP055255095, GB ISSN: 0260-8774, DOI: 10.1016/j.jfoodeng.2013.04.010

## Description

### BACKGROUND

Flavor nanoemulsions have been used to create optically clear beverages containing hydrophobic flavor oils. Surfactants are added to facilitate the formation of nanoemulsions and also stabilize these nanoemulsions.

US Patent Application Publication 2009/0285952 discloses a nanoemulsion composition containing an enzyme-degraded lecithin for use in alcoholic drinks or carbonated drinks. Japanese Application 2003/284510 describes a composition having alcohol resistance in which a polyglyceryl fatty acid ester and sucrose fatty acid ester were used as surfactants. However, this composition was considered unsatisfactory to flavors due to the surfactants contained therein. See US2009/0285952. Japanese Patent 05588048 discloses a flavor emulsion composition useful for alcoholic beverages and containing hydrophilic polyglyceryl fatty acid ester, lipophilic polyglyceryl fatty ester, and lysolecithin. High concentrations of polyglyceryl esters were employed in the composition. US2009/0196972 describes flavor compositions with a high level (e.g., at least 20%) of polysorbate as a surfactant. US2013/0064954 discloses flavor nanoemulsion compositions for food applications (e.g., sauce) with a high level of polysorbate. However, these known emulsion compositions are not ideal for preparing optically clear, stable alcoholic beverages.

US Patent Application Publication 2010/0136175 discloses formulations of clear, thermodynamically stable and concentrated oil-in-water microemulsions, comprising a surfactant system which is formed of a sugar ester of a fatty acid together with lecithin, as well as their use for the flavoring of clear beverages.

US Patent Application Publication 2002/0187238 discloses formulations of clear, thermodynamically stable and concentrated oil-in-water microemulsions are disclosed, as well as their use for the flavoring of clear beverages.

The publication by Huaiqiong Chen et al: "Microemulsions Based on a Sunflower Lecithin-Tween 20 Blend Have High Capacity for Dissolving Peppermint Oil and Stabilizing Coenzyme Q 1 O", Journal Of Agricultural And Food Chemistry, vol. 63, no. 3, 13 January 2015 (2015-01-13), pages 983-989, relates to a study of capability of microemulsions to dissolve peppermint oil by blending sunflower lecithin with Tween 20 and to study the possibility of codelivering lipophilic bioactive compounds.

The publication by Jiajia Rao et al: "Optimization of lipid nanoparticle formation for beverage applications: Influence of oil type, cosolvents, and cosurfactants on nanoemulsion properties", Journal Of Food Engineering, vol. 118, no. 2, 21 April 2013 (2013-04-21), pages 198-204, relates to a study of influence of flavor oil composition, cosolvents (glycerol and propylene glycol), and cosurfactant (lysolecithin) on the formation and stability of lemon oil nanoemulsions stabilized by sucrose monoesters.

There is a need to develop a flavor nanoemulsion having a high stability to prepare optically clear, stable alcoholic beverages with an enhanced flavor.

### SUMMARY OF THE INVENTION

This invention is based on the discovery that flavor nanoemulsions prepared from a polyethoxylated sorbitan fatty acid ester and a lecithin are stable and optically clear in liquid beverages including alcoholic beverages.

Accordingly, one aspect of this invention relates to a flavor nanoemulsion comprising a plurality of oil droplets, an aqueous phase, and a surfactant system. The present invention relates to a flavor nanoemulsion according to the attached claim 1, a liquid beverage or liquid beverage concentrate comprising the flavor nanoemulsion according to claim 12 and a method of preparing the nanoemulsion according to claim 14.

The nanoemulsion has a water activity of 0.7 or less (e.g., 0.65 or less and 0.6 or less) and may have a water content of 25% or less (e.g., 20% or less and 15% or less) by weight of the nanoemulsion.

Each of the oil droplets, having a droplet size of 0.1 to 500 nm, contains a flavor and disperses in the aqueous phase. In addition, the oil droplets each can contain an oil-soluble vitamin, an oil-soluble colorant, an antioxidant, a taste modulator, a mouthfeel modulator, or a combination thereof. Exemplary taste modulators are acid maskers, cooling agents, hot tasting substances, sweet enhancers, salt enhancers, salivation-inducing substances, substances causing a warmth or tingling feeling, and combinations thereof.

The aqueous phase contains water and a co-solvent. Typical co-solvent is polyols including propylene glycol, 1.3-propandiol, glycerin, butylene glycol, erythritol, xylitol, mannitol, sorbitol, isomalt, and combinations thereof. In some embodiments, the co-solvent is a mixture of propylene glycol, glycerin, and sorbitol. In specific embodiments, propylene glycol is present at a level of 5 to 25%, glycerin is present at a level of 0.1 to 35%, and sorbitol is present at a level of 25 to 65%, all by weight of the flavor nanoemulsion. The weight ratio between water and the co-solvent is 1:95 to 1:3, preferably 1 40 to 1:4, and more preferably 1:20 to 1:5.

The surfactant system includes a polyethoxylated sorbitan fatty acid ester and a lecithin. It can be at a level of 0.1 to 20% and the flavor can be at a level of 1 to 20%, both by the weight of the flavor nanoemulsion.

The polyethoxylated sorbitan fatty acid ester has an HLB of 9 to 20. Examples include polyoxyethylene sorbitan monolaurate, polyoxyethylene sorbitan monopalmitate, polyoxyethylene sorbitan monostearate, polyoxyethylene sorbitan monooleate, and a combination thereof

The lecithin, having an HLB of 4 to 16, can be native, deoiled, fractionated, or enzymemodified.

The weight ratio between the polyethoxylated sorbitan fatty acid ester and the lecithin is 30:1 to 1:5. The polyethoxylated sorbitan fatty acid ester is typically present at a level of 0.05 to 15%, and the lecithin is typically present at a level of 0.05 to 5%, both by weight of the flavor nanoemulsion.

Any flavor nanoemulsion described above can further contain a defoamer selected from the group consisting of a silicone emulsion antifoamer, polydimethylsiloxane antifoamer, 2-octanol, petrolatum, hop lipid, alginate, mineral oil, sobitan monostearate, and a combination thereof.

Another aspect of this invention relates to a liquid beverage or liquid beverage concentrate containing any of the flavor nanoemulsions described above. In some embodiments, the liquid beverage or liquid beverage concentrate, having a turbidity of 10 NTU or less (e.g., NTU or less, 3 NTU or less, and 2 NTU or less), contains alcohol from 1 to 60% (e.g., 2-30%).

Still within the scope of this invention is a method of preparing one of the above-described flavor nanoemulsions. The method include the steps of: (a) providing an aqueous phase containing a polyethoxylated sorbitan fatty acid ester, water, and a co-solvent, (b) providing an oil phase containing a flavor and a lecithin, and (c) emulsifying the oil phase into the aqueous phase, thereby obtaining the nanoemulsion. The polyethoxylated sorbitan fatty acid ester has an HLB of 9 to 20, and the lecithin has an HLB of 4 to 16, and the weight ratio of the polyethoxylated sorbitan fatty acid ester and the flavor is in the range of 1 : 15 to 3 : 1. The polyethoxylated sorbitan fatty acid ester, co-solvent, and lecithin are defined above.

The term "free fatty acid" refers to the fatty acid containing a free carboxyl group (-COOH). Free fatty acids include their salts and solvates.

The details of one or more embodiments of the invention are set forth in the description below. Other features, objects, and advantages of the invention will be apparent from the description and the claims.

### DETAILED DESCRIPTION OF THE INVENTION

Many flavoring compounds in beverage preparation are essential oils such as orange, lemon, and grapefruit, which have limited water solubility. Flavor emulsions that result in optically clear beverages are of increasing interest in the beverage industry. Desirable flavor emulsions (a mean particle size of 200 nanometers or less) are visually translucent and thermodynamically stable.

It has been surprisingly found that certain flavor nanoemulsions are optically clear and maintain a high stability in alcoholic beverages. These flavor nanoemulsions can be readily prepared from a surfactant system containing at least a polyethoxylated sorbitan fatty acid ester and a lecithin.

Accordingly, the flavor nanoemulsions of this invention are typically oil-in-water systems each having a plurality of oil droplets, a continuous aqueous phase, a surfactant system, and, optionally, a defoamer.

The oil droplets are normally hydrophobic and immiscible with water. They contain one or more active materials selected from flavors, oil-soluble vitamins, oil-soluble colorants, antioxidants, taste modulators, mouthfeel modulators, oil-soluble defoamer, and any combinations thereof. Useful taste modulators include acid maskers, polyaldo matric, beer hops, cooling agents, hot tasting substances, sweet enhancers, salt enhancers, salivation-inducing substances, substances causing a warmth or tingling feeling, and any combinations thereof. Exemplary mouthfeel modulators are coconut oil, coconut milk with or without sugar, vanillin, stevia glycosides such as Rebaudiosides A, C, D, E, and F, medium chain tryglycerides, steviol, glucosylated stevia glycosides, and combinations thereof.

Other suitable active materials include fragrances, pro-fragrances, malodor counteractive agents, anti-inflammatory agents, fungicides, anesthetics, analgesics, antimicrobial actives, anti-viral agents, anti-infectious agents, anti-acne agents, skin lightening agents, insect repellants, emollients, skin moisturizing agents, wrinkle control agents, UV protection agents, fabric softener actives, hard surface cleaning actives, skin or hair conditioning agents, insect repellants, animal repellents, vermin repellents, flame retardants, antistatic agents, nanometer size inorganic solids, polymeric or elastomeric particles, and any combinations thereof.

Other than the active materials, the oil droplets can also contain adjunct materials such as viscosity modifiers and pH modifiers. The active materials and the adjunct materials are described below in more details.

When the oil droplets contain a flavor, the flavor is present at a level of 0.1 to 20% (*e.g.,* 0.2 to 15% and 0.5 to 10%) by weight of the flavor nanoemulsion.

The oil droplets each have a droplet size of 0.1 to 500 nm, 0.1 to 200 nm, and 1 to 100 nm.

The oil droplets are dispersed in the aqueous phase that contains water and a co-solvent. The co-solvent is added to improve the solubility of the surfactant system in water and also the stability of the nanoemulsion. Exemplary co-solvents are polyols selected from the group consisting of propylene glycol, 1,3-propandiol, glycerin, butylene glycol, erythritol, xylitol, mannitol sorbitol isomalt or a combination thereof.

In some embodiments, the flavor nanoemulsion contains an aqueous phase having a co-solvent that is a mixture of propylene glycol, glycerin, and sorbitol. In these embodiments, propylene glycol can be present at a level of 5 to 25% (*e.g.,* 5 to 20%), glycerin is present at a level of 0.1to 35% (*e.g.,* 5 to 30%), and sorbitol is present at a level of 25 to 65% (*e.g.,* 30 to 50%), all by weight of the flavor nanoemulsion.

In other embodiments, the weight ratio between water and the polyol is 1 : 95 to 1 : 2 (*e.g.,* 1 : 95 to 1 : 3, 1 : 95 to 1 : 4, 1 : 50 to 1 : 3, and 1 : 20 to 1 : 5).

The surfactant system is contained in the oil phase, the aqueous phase, or both. It is present at a level of 0.1 to 20% (*e.g.,* 0.2 to 20%, 0.3 to 15%, and 0.5 to 12%) by weight of the nanoemulsion.

Suitable surfactant systems have at least two surfactants: a polyethoxylated sorbitan fatty acid ester and a lecithin. The weight ratio between the polyethoxylated sorbitan fatty acid ester and the lecithin is 30 : 1 to 1 : 5 (*e.g.,* 25 : 1 to 1 : 2 and 20 : 1 to 1 : 1).

The polyethoxylated sorbitan fatty acid esters have an HLB of 9 to 20, preferably 13 to 20, and more preferably, 14 to 18. The term "HLB," as used herein, refers to the "hydrophilic-lipophilic balance" of a molecule. The HLB number indicates the polarity of the molecules in a range of 1-40, with the most commonly used emulsifiers having a value between 1 and 20. The HLB number increases with increasing hydrophilicity. The HLB of a surfactant can be determined by calculating values for the different regions of the molecule, as described by Griffin, "Classification of Surface-Active Agents by 'HLB,'" Journal of the Society of Cosmetic Chemists 1 (1949), 311-26; and Griffin, "Calculation of HLB Values of Non-Ionic Surfactants," Journal of the Society of Cosmetic Chemists 5 (1954), 249-56.

Suitable polyethoxylated sorbitan fatty acid esters include polyoxyethylene sorbitan monolaurate, polyoxyethylene sorbitan monopalmitate, polyoxyethylene sorbitan monostearate, and polyoxyethylene sorbitan monooleate. The number of repetitive oxyethylene -(CH₂CH₂-O)-can be in the range of 2 to 1000 (*e.g.,* 5 to 100, 10 to 50, 10 to 30, and 20). Commercially available polyethoxylated sorbitan fatty acid esters are those under the name Tween™ by ICI Americas, Inc. (Wilmington, Delaware), *e.g.,* Tween™ 60 (HLB of 14.9), Tween™ 80 (HLB of 15), and Tween™ 20 (HLB of 16.7). They have 20 repetitive oxyethylene units.

The polyethoxylated sorbitan fatty acid ester is present at a level of 0.05 to 15% (*e.g.,* 0.1 to 12%, 0.15 to 10%, and 0.2 to 8%) by weight of the flavor nanoemulsion. The weight ratio of the polyethoxylated sorbitan fatty acid ester and the flavor is in the range of 1 : 15 to 3 : 1 (*e.g.,* 1 : 10 to 2.5 : 1 and 1 : 10 to 2 : 1).

The lecithins have an HLB ranging from 4 to 16 (*e.g.,* 6-16 and 8-16). These lecithins can be native, deoiled, fractionated, or enzyme-modified. Native and standard liquid lecithins have an HLB of 4 to 8 and enzyme modified lecithins ("lysolecithin") have an HLB of 8 to 16.

Lecithins are mixtures of two primary components, namely phospholipids and triglycerides, with minor amounts of other constituents such as phytoglycolipids, phytosterols, tocopherols, and fatty acids. Phospholipids in lecithin include phosphatidylcholines, phosphatidylethanolamine, phosphatidylserine, phosphatidic acid, phosphatidylglycerol, and phosphatidylinositol. Phosphatidylcholines can be enzymatically modified to form lysophosphatidylcholines. Both phosphatidylcholines and lysophosphatidylcholines are desirable surfactants contained in lecithins.

Lecithins are prepared by extracting and purifying phospholipids from naturally occurring products including, but not limited to, soybeans, eggs, sunflower or rapeseed (canola) seeds, milk, marine sources, and cottonseeds. Food-grade lecithins are available in liquid, granular and powder from commercial sources and include, e.g., ALCOLEC Lecithins sold by American Lecithin Company (Oxford, CT) and TOPCITHIN, LECIPRIME, LECISOY, EMULFLUID, METARIN, EMULPUR, LECIGRAN, EPIKURON, LECIMULTHIN, EMULTOP, and OVOTHIN Lecithins sold by CARGILL (Mechelen, Belgium), and SOLEC Lecithins sold by DuPont Nutrition & Health (St. Louis, MO).

Lecithins may be deoiled (i.e., having 3% or less residual oil) or fractionated (i.e., separating soluble components and insoluble components in a solvent, which can be an alcohol such as ethanol or an ethanol-water mixture). During the fractionation process, a lecithin is mixed with an alcohol (such as ethanol or ethanol-water). Phosphatidylcholine has a good solubility in ethanol, whereas most other phospholipids do not dissolve well. The ethanol phase is separated from the lecithin sludge. Removal of ethanol yields a phosphatidylcholine-enriched lecithin.

Preferably, phosphatidylcholine and lysophosphatidylcholine are present at a level of 20% or greater by weight of the lecithin. In addition, free fatty acids are also present in lecithins. It is desirable that their level is 15% or less by weight of the lecithin (*e.g.,* 10% or less, and 5% or less).

The term "lecithin" as used herein refers to both a single type of lecithin (e.g., native, deoiled, fractionated, or enzyme modified) as well as to a mixture of lecithins.

The lecithin can be present at a level of 0.05 to 15% (*e.g.,* 0.1 to 10% and 0.2 to 5%) by weight of the flavor nanoemulsion.

Other than polyethoxylated sorbitan fatty acid esters and lecithins, other food safe surfactants can also be added to the flavor nanoemulsions of this invention. Examples include ammonium phosphatides, mono- or diglycerides of fatty acids including distilled monoglycerides, acetic acid esters of mono- and diglycerides (Acetem), lactic acid esters of mono- and diglycerides of fatty acids (Lactem), citric acid esters of mono and diglycerides of fatty acids (Citrem), mono and diacetyl tartaric acid esters of mono and diglycerides of fatty acids (Datem), succinic acid esters of monoglycerides of fatty acids (SMG), ethoxylated monoglycerides, sucrose esters of fatty acids, sucroglycerides, polyglycerol esters of fatty acids, polyglycerol polyricinoleate, propane - 1,2 diol esters of fatty acids, thermally oxidized soya bean oil interacted with mono- or diglycerides of fatty acids, sodium stearoyl lactylate (SSL), calcium stearoyl lactylate (CSL), stearyl tartrate, sorbitan esters of fatty acids, polyglycerol esters of interesterified castor oil acid (E476), sodium stearoyllatylate, sodium lauryl sulfate, polyoxyethylated hydrogenated castor oil (for instance, such sold under the trade name CREMO-PHOR), block copolymers of ethylene oxide and propylene oxide (for instance as sold under the trade name PLURONIC or the trade name POLOXAMER), polyoxyethylene fatty alcohol ethers, and polyoxyethylene stearic acid ester. Examples of sorbitan esters of fatty acids are sorbitan monostearate, sorbitan tristearate, sorbitan monolaurate, sorbitan monooleate, sorbitan monopalmitate, and saccharose esters of fatty acids.

Optionally, the flavor nanoemulsion contains a defoamer, which can be a water-dispersible defoamer or oil-soluble defoamer. Examples include silicone emulsion antifoamers, polydimethylsiloxane antifoamers, 2-octanol, petrolatum, hop lipids, alginates, mineral oil, sobitan monostearate, and a combination thereof.

The flavor nanoemulsions described above appear translucent or optically clear. They can be added to an alcoholic or non-alcoholic, carbonated or non-carbonated beverage base solution to enhance the flavor, taste, or mouthfeel of the beverage. When a clear beverage base solution is used, the final beverage remains optically clear while receiving the benefit of taste enhancement by introducing a nanoemulsion of this invention.

The term "translucent" refers to a nanoemulsion that can be seen through, although the light may be diffused by the material itself. In this respect, the nanoemulsion of the present invention provides a clear soft drink beverage. The term "clear" or "optically clear" (transparent) refers to a nanoemulsion or beverage having a turbidity of less than 10 Nephelometric Turbidity Units ("NTU;" *e.g.,* less than 5 NTU and less than 3 NTU). Turbidity can be measured following the procedures well known in the art, e.g., Fernandez et al., Food Chemistry (2000), 71, 563-66; and Christensen et al., Journal - American Water Works Association (2003), 95, 179-189.

The flavor nanoemulsions of this invention have a relatively low level of water. The flavor nanoemulsions contain water 25% or less (*e.g.,* 20% or less, 15% or less, 1 to 20%, 5-20%). The flavor nanoemulsions each have a water activity of 0.7 or less (*e.g.,* 0.65 or less, 0.6 or less, and 0.55 or less).

Water activity is the ratio between the vapor pressure of the flavor nanoemulsion, when in a completely undisturbed balance with the surrounding air media, and the vapor pressure of distilled water under identical conditions. A water activity of 0.7 means the vapor pressure is 70 percent of that of pure water. Using this particular definition, pure distilled water has a water activity of exactly one. As temperature increases, water activity typically increases.

Higher water activity is necessary to support the growth of microorganisms. Bacteria usually require at least a water activity of 0.91, and fungi at least 0.7.

Having a water activity of 0.7 or less, the flavor nanoemulsions of this invention will not support the growth of microorganisms. As such, the flavor nanoemulsions usually are free of a preservative.

In certain embodiments, the flavor nanoemulsion further contains, in the aqueous phase, 0.01% to 20% a carrier material including mono- and di-saccharide sugars such as glucose, lactose, levulose, trehalose, fructose, maltose, ribose, sucrose, or a combination thereof. In other embodiments, the aqueous phase further contains a protein, gum, and/or hydrocolloid. Suitable proteins include soy protein isolate, soy protein concentrate, whey protein isolate, whey protein concentrate, gelatin, pea protein, and protein hydrolysates. Example of gums and hydrocolloids include xanthan gum, guar gum, gum acaia, chemically modified gum acaia, pectin, and alginate.

Flavor nanoemulsions of the present invention are prepared by emulsifying the flavor oil into the aqueous phase in the presence of polyethoxylated sorbitan fatty acid ester and lecithin using conventional techniques. Briefly, nanoemulsions are typically prepared by mixing the aqueous and oil phases, and subjecting the mixture to homogenization several times, or, in the terminology of the art, to make more than one "pass." In accordance with the present invention, a pre-emulsion step (*i.e.,* a high shear mixing step) is critical to set the initial particle size prior to high-pressure homogenization. The speed of high shear mixing may range from 3,000 rpm to 20,000 rpm and the time of mixing may range from 5 to 30 minutes. A high-pressure homogenizer (*e.g.,* commercially available Niro Panda 2000) or other type of homogenizer (*e.g.,* MICROFLUIDIZER commercially available from Microfluidics or EMULSIFLEX commercially available from Avestin) is subsequently used to prepare the nanoemulsion. Homogenization can be carried out at 3,000/300 psi to 10,000/1,000 psi using a two-stage homogenizer for two, three, or more passes; or 6,500/500 psi to 20,000/2,000 psi for one, two or more passes.

The instant flavor nanoemulsion can be used in a variety of consumer, food, or pharmaceutical products. In particular, the flavor nanoemulsion finds application in gums, confections, oral care products, beverages, snacks, dairy products, soups, sauces, condiments, detergents, fabric softeners and other fabric care products, antiperspirants, deodorants, talc, kitty litter, hair care and styling products, personal care products, air fresheners, cereals, baked goods and cleaners.

In specific embodiments, the instant flavor nanoemulsion is used in beverages and beverage liquid concentrates. Accordingly, in addition to flavor nanoemulsions, the present invention also provides optically clear final beverage products or liquid beverage concentrates containing the flavor nanoemulsion of the invention.

In some embodiments, the instant flavor nanoemulsion is dosed at a level between 1 ppm to 60% (e.g., 1 ppm to 20% and 5 ppm to 5%) by weight of the final beverage product so that the product contains a flavor oil 0.01ppm to 10% (0.1 ppm to 5%, 0.5 ppm to 1%, and 1 ppm to 100 ppm). Using the flavor emulsion of this invention, the final beverage product thus prepared is clear, having a turbidity of 10 NTU (*e.g.,* 5 NTU and 3 NTU) or below.

As used herein, the term "liquid beverage concentrate" means a liquid composition that can be diluted with another liquid, such as an aqueous, potable liquid to provide a final beverage or added to a food product prior to being consumed. The phrase "liquid" refers to a non-gaseous, flowable, fluid composition at room temperature (*i.e.,* 70°F). The term "final beverage" as used herein means a beverage that has been prepared either by the standard soft drink (i.e., ready-to-drink) preparation procedure or by diluting the concentrate to provide a beverage in a potable, consumable form. In some aspects, the concentrate is non-potable due to acidulant content and/or flavor intensity. By way of example to clarify the term "concentration," a concentration of 75 times (*i.e.,* "75X") would be equivalent to 1 part concentrate to 74 parts water (or other potable liquid) to provide the final beverage. In other words, the flavor profile of the final beverage is taken into account when determining an appropriate level of dilution, and thus concentration, of the liquid beverage concentrate. The dilution factor of the concentrate can also be expressed as the amount necessary to provide a single serving of concentrate.

The viscosity, pH, and formulations of the concentrates will depend, at least in part, on the intended dilution factor. In one approach, a moderately concentrated product may be formulated to be diluted by a factor of at least 5 times to provide a final beverage, which can be, for example, an 8 ounce beverage. In one aspect, the concentrate is formulated to be diluted by a factor of 5 to 15 times to provide a final beverage. In this form, the liquid concentrate has a pH of 1.8 to 4, or more particularly, 1.8 to 2.9, 2 to 3.1, or 2 to 2.5; and a viscosity of 7.5 to 100 cP, 10 to 100 cP, 15 to 100 cP, 10 to 50 cP, or 10 to 20 cP, as measured using Spindle S00 at 50 rpm and 20°C with a Brookfield DVII + Pro Viscometer. In some embodiments, the concentrate includes at least 0.1 to 15 percent acidulant by weight of the concentrate. Any edible, food grade organic or inorganic acid, such as, but not limited to, citric acid, malic acid, succinic acid, acetic acid, hydrochloric acid, adipic acid, tartaric acid, fumaric acid, phosphoric acid, lactic acid, sodium acid pyrophosphate, salts thereof, and combinations thereof can be used, if desired. The selection of the acidulant may depend, at least in part, on the desired pH of the concentrate and/or taste imparted by the acidulant to the diluted final beverage. In another aspect, the amount of acidulant included in the concentrate may depend on the strength of the acid. For example, a larger quantity of lactic acid would be needed in the concentrate to reduce the pH in the final beverage than a stronger acid, such as phosphoric acid. In some embodiments, a buffer can be added to the concentrate to provide for increased acid content at a desired pH. Suitable buffers include, for example, a conjugated base of an acid, gluconate, acetate, phosphate or any salt of an acid (e.g., sodium citrate and potassium citrate). In other instances, an undissociated salt of the acid can buffer the concentrate.

The beverages or concentrates of the invention can include one or more juices or juice concentrates (such as at least a 4X concentrated product) from fruits or vegetables for bulk solid addition. In one aspect, the juice or juice concentrate may include, for example, coconut juice (also commonly referred to as coconut water), apple, pear, grape, orange, potato, tangerine, lemon, lime, tomato, carrot, beet, asparagus, celery, kale, spinach, pumpkin, strawberry, raspberry, banana, blueberry, mango, passionfruit, peach, plum, papaya, and combinations. The juice or juice concentrates may also be added as a puree, if desired.

As indicated, concentrates can be added to potable liquids to form flavored beverages. In some aspects, the concentrate may be non-potable (such as due to the high acid content and intensity of flavor). For example, the beverage concentrate can be used to provide flavor to water, cola, carbonated water, tea, coffee, seltzer, club soda, the like, and can also be used to enhance the flavor of juice. In one embodiment, the beverage concentrate can be used to provide flavor to alcoholic beverages, including but not limited to flavored champagne, sparkling wine, wine spritzer, cocktail, martini, or the like. In particular embodiments, the concentrate is used in an optically clear beverage.

Beverage concentrates can also be combined with a variety of food products to add flavor to the food products. For example, concentrates can be used to provide flavor to a variety of solid, semi-solid, and liquid food products, including but not limited to oatmeal, cereal, yogurt, strained yogurt, cottage cheese, cream cheese, frosting, salad dressing, sauce, and desserts such as ice cream, sherbet, sorbet, and Italian ice. Appropriate ratios of the beverage concentrate to food product or beverage can readily be determined by one of ordinary skill in the art.

For the purpose of this invention, stability is defined as a flavor quality and intensity that remains acceptable for use in end use applications. Preferably, a stable emulsion has a shelf-life of at least 1 year to three years depending on storage conditions.

A nanoemulsion refers to lipid droplets in size of 200 nanometers or less (*e.g.,* 50 to 150 nanometers) in diameter. See Mason et al. 2006, J. Physics: Condensed Matter 18, 635-66. Nanoemulsions are produced by mixing a water-immiscible oil phase into an aqueous phase with a high-stress mechanical process.

Flavor oils suitable for preparing the nanoemulsions of this invention contain one or more volatile and nonvolatile compounds. A variety of flavors can be used in accordance with the present invention. Flavors may be chosen from synthetic flavors, flavoring oils and oil extracts derived from plants, leaves, flowers, fruits, and combinations thereof. Representative flavor oils include, but are not limited to, spearmint oil, cinnamon oil, peppermint oil, clove oil, bay oil, thyme oil, cedar leaf oil, oil of nutmeg, oil of sage, and oil of bitter almonds. Also useful are artificial, natural or synthetic fruit flavors such as vanilla, chocolate, coffee, cocoa and citrus oil, including lemon, orange, grape, lime and grapefruit, and fruit essences including apple, pear, peach, strawberry, watermelon, raspberry, cherry, plum, pineapple, apricot and so forth. These flavors can be used individually or in admixture.

Volatile compounds in the flavor oils may include, but are not limited to, acetaldehyde, dimethyl sulfide, ethyl acetate, ethyl propionate, methyl butyrate, and ethyl butyrate. Flavors containing volatile aldehydes or esters include, e.g., cinnamyl acetate, cinnamaldehyde, citral, diethylacetal, dihydrocarvyl acetate, eugenyl formate, and p-methylanisole. Further examples of volatile compounds that may be present in the flavor oils include acetaldehyde (apple); benzaldehyde (cherry, almond); cinnamic aldehyde (cinnamon); citral, i.e., alpha citral (lemon, lime); neral, i.e., beta citral (lemon, lime); decanal (orange, lemon); ethyl vanillin (vanilla, cream); heliotropine, i.e., piperonal (vanilla, cream); vanillin (vanilla, cream); alpha-amyl cinnamaldehyde (spicy fruity flavors); butyraldehyde (butter, cheese); valeraldehyde (butter, cheese); citronellal (modifies, many types); decanal (citrus fruits); aldehyde C-8 (citrus fruits); aldehyde C-9 (citrus fruits); aldehyde C-12 (citrus fruits); 2-ethyl butyraldehyde (berry fruits); hexenal, i.e., trans-2 (berry fruits); tolyl aldehyde (cherry, almond); veratraldehyde (vanilla); 2,6-dimethyl-5-heptenal, i.e., melonal (melon); 2-6-dimethyloctanal (green fruit); and 2-dodecenal (citrus, mandarin); cherry; or grape and mixtures thereof. The composition may also contain taste modulators and artificial sweeteners.

The physical, chemical, and odor properties of selected volatile compounds are presented in Table 1.

**TABLE 1**

| Compound | MW (g/mol) | Boiling Point (°C) | Water Solubility (g/L, approx.) | Odor Descriptors* |
|---|---|---|---|---|
| acetaldehyde | 44.05 | 21 | soluble | pungent; ethereal |
| dimethyl sulfide | 62.02 | 36 | insoluble | cabbage |
| ethyl acetate | 88.11 | 77 | 90 | ethereal; fruity |
| ethyl propionate | 102.13 | 99 | 14 | sweet; fruity; ethereal |
| methyl butyrate | 102.13 | 102 | 15 | fruity; pineapple |
| ethyl butyrate | 116.16 | 121 | 6 | fruity; pineapple |

| | | | | |
|---|---|---|---|---|
| * The Good Scents Company and Merck Index, 12^{th} Ed. | | | | |

The flavor nanoemulsion can further contain the following active materials:
(i) taste masking agents, substances for masking one or more unpleasant taste sensations, in particular a bitter, astringent and/or metallic taste sensation or aftertaste. Examples include lactisol [2O-(4-methoxyphenyl) lactic acid] (cf. U.S. Pat. No. 5,045,336), 2,4-dihydroxybenzoic acid potassium salt (cf. U.S. Pat. No. 5,643,941), ginger extracts (cf. GB 2,380,936), neohesperidine dihydrochalcone (cf. Manufacturing Chemist 2000, July issue, p. 16-17), specific flavones (2-phenylchrom-2-en-4-ones) (cf. U.S. Pat. No. 5,580,545), specific nucleotides, for example cytidine-5'-monophosphates (CMP) (cf. US 2002/0177576), specific sodium salts, such as sodium chloride, sodium citrate, sodium acetate and sodium lactate (cf. Nature, 1997, Vol. 387, p. 563), a lipoprotein of .beta.-lactoglobulin and phosphatidic acid (cf. EPA 635 218), neodiosmine [5,7-dihydroxy-2-(4-methoxy-3-hydroxyphenyl)-7-O-neohesperidosyl-chrom-2-en-4-one] (cf. U.S. Pat. No. 4,154,862), preferably hydroxyflavanones according to EP 1 258 200, in turn preferred in this respect 2-(4-hydroxyphenyl)-5,7-dihydroxychroman-4-one (naringenin), 2-(3,4-dihydroxyphenyl)-5,7-dihydroxychroman-4-one (eriodictyol), 2-(3,4-dihydroxyphenyl)-5-hydroxy-7-methoxychroman-4-one (eriodictyol-7-methylether), 2-(3,4-dihydroxyphenyl)-7-hydroxy-5-methoxychroman-4-one (eriodictyol-5-methylether) and 2-(4-hydroxy-3-methoxyphenyl)-5,7-dihydroxychroman-4-one (homoeriodictyol), the (2S)- or (2R)-enantiomers thereof or mixtures thereof as well as the mono- or polyvalent phenolate salts thereof with Na⁺, K⁺, NH4⁺, Ca²⁺, Mg²⁺ or Al³⁺ as counter cations or .gamma.-aminobutyric acid (4-aminobutyric acid, as the neutral form ("inner salt") or in the carboxylate or ammonium form) according to WO 2005/09684;
(ii) taste sensates including hot tasting, salivation-inducing substances, substances causing a warmth or tingling feeling, and cooling active ingredients. Examples of hot tasting and/or salivation-inducing substances and/or substances which cause a feeling of warmth and/or a tingling feeling on the skin or on the mucous membranes and which can be a constituent of the products according to the invention are: capsaicin, dihydrocapsaicin, gingerol, paradol, shogaol, piperine, carboxylic acid-N-vanillylamides, in particular nonanoic acid-N-vanillylamide, pellitorin or spilanthol, 2-nonanoic acid amides, in particular 2-nonanoic acid-N-isobutylamide, 2-nonanoic acid-N-4-hydroxy-3-methoxyphenylamide, alkyl ethers of 4-hydroxy-3-methoxybenzyl alcohol, in particular 4-hydroxy-3-methoxybenzyl-n-butylether, alkyl ethers of 4-acyloxy-3-methoxybenzyl alcohol, in particular 4-acetyloxy-3-methoxybenzyl-n-butylether and 4-acetyloxy-3-methoxybenzyl-n-hexylether, alkyl ethers of 3-hydroxy-4-methoxybenzyl alcohol, alkyl ethers of 3,4-dimethoxybenzyl alcohol, alkyl ethers of 3-ethoxy-4-hydroxybenzyl alcohol, alkyl ethers of 3,4-methylene dioxybenzyl alcohol, (4-hydroxy-3-methoxyphenyl)acetic acid amides, in particular (4-hydroxy-3-methoxyphenyl)acetic acid-N-n-octylamide, vanillomandelic acid alkylamides, ferulic acid-phenethylamides, nicotinaldehyde, methylnicotinate, propylnicotinate, 2-butoxyethylnicotinate, benzylnicotinate, 1-acetoxychavicol, polygodial and isodrimeninol, further preferred cis- and/or trans-pellitorin according to WO 2004/000787 or WO 2004/043906, alkenecarboxylic acid-N-alkylamides according to WO 2005/044778, mandelic acid alkylamides according to WO 03/106404 or alkyloxyalkanoic acid amides according to WO 2006/003210. Examples of preferred hot tasting natural extracts and/or natural extracts which cause a feeling of warmth and/or a tingling feeling on the skin or on the mucous membranes and which can be a constituent of the products according to the invention are: extracts of paprika, extracts of pepper (for example capsicum extract), extracts of chili pepper, extracts of ginger roots, extracts of Aframomum melgueta, extracts of Spilanthes-acmella, extracts of Kaempferia galangal or extracts of Alpinia galanga. Suitable cooling active ingredients include the following: 1-menthol, d-menthol, racemic menthol, menthone glycerol acetal (trade name: Frescolat.RTM.MGA), menthyl lactate (trade name: Frescolat.RTM.ML, menthyl lactate preferably being 1-menthyl lactate, in particular 1-menthyl-1-lactate), substituted menthyl-3-carboxamides (for example menthyl-3-carboxylic acid-N-ethylamide), 2-isopropyl-N-2,3-trimethyl-butanamide, substituted cyclohexane carboxamides, 3-menthoxypropane-1,2-diol, 2-hydroxyethyl menthyl carbonate, 2-hydroxypropyl menthyl carbonate, N-acetylglycine menthyl ester, isopulegol, hydroxycarboxylic acid menthyl esters (for example menthyl-3-hydroxybutyrate), monomenthyl succinate, 2-mercaptocyclodecanone, menthyl-2-pyrrolidin-5-onecarboxylate, 2,3-dihydroxy-p-menthane, 3,3,5-trimethylcyclohexanone glycerol ketal, 3-menthyl-3,6-di- and -trioxaalkanoates, 3-menthyl methoxyacetate and icilin. Cooling active ingredients which are particularly preferred are as follows: 1-menthol, racemic menthol, menthone glycerol acetal (trade name: Frescolat.RTM.MGA), menthyl lactate (preferably 1-menthyl lactate, in particular 1-menthyl-1-lactate, trade name: Frescolat.RTM.ML), 3-menthoxypropane-1,2-diol, 2-hydroxyethyl menthyl carbonate, 2-hydroxypropyl menthyl carbonate.
(iii) vitamins including any vitamin, a derivative thereof and a salt thereof. Examples are as follows: vitamin A and its analogs and derivatives (e.g., retinol, retinal, retinyl palmitate, retinoic acid, tretinoin, and iso-tretinoin, known collectively as retinoids), vitamin E (tocopherol and its derivatives), vitamin C (L-ascorbic acid and its esters and other derivatives), vitamin B3 (niacinamide and its derivatives), alpha hydroxy acids (such as glycolic acid, lactic acid, tartaric acid, malic acid, citric acid, etc.) and beta hydroxy acids (such as salicylic acid and the like);
(iv) antibacterials including bisguanidines (e.g., chlorhexidine digluconate), diphenyl compounds, benzyl alcohols, trihalocarbanilides, quaternary ammonium compounds, ethoxylated phenols, and phenolic compounds, such as halo-substituted phenolic compounds, like PCMX (i.e., p-chloro-m-xylenol), triclosan (i.e., 2 , 4, 4 ' -trichloro-2 ' hydroxy-diphenylether), thymol, and triclocarban;
(v) antioxidants such as beta-carotene, vitamin C (Ascorbic Acid) or an ester thereof, vitamin A or an ester thereof, vitamin E or an ester thereof, lutein or an ester thereof, lignan, lycopene, selenium, flavonoids, vitamin-like antioxidants such as coenzyme Q10 (CoQ10) and glutathione, and antioxidant enzymes such as superoxide dismutase (SOD), catalase, and glutathione peroxidase;
(vi) anti-inflammatory agents including, e.g., methyl salicylate, aspirin, ibuprofen, and naproxen. Additional anti-inflammatories useful in topical applications include corticosteroids, such as, but not limited to, flurandrenolide, clobetasol propionate, halobetasol propionate, fluticasone propionate, betamethasone dipropionate, betamethasone benzoate, betamethasone valerate, desoximethasone, dexamethasone, diflorasone diacetate, mometasone furoate, amcinodine, halcinonide, fluocinonide, fluocinolone acetonide, desonide, triamcinolone acetonide, hydrocortisone, hydrocortisone acetate, fluoromethalone, methylprednisolone, and predinicarbate;
(vii) anesthetics that can be delivered locally including benzocaine, butamben, butamben picrate, cocaine, procaine, tetracaine, lidocaine and pramoxine hydrochloride;
(viii) analgesics such as ibuprofen, diclofenac, capsaicin, and lidocaine;
(ix) antifungal agents. Non-limiting examples are micanazole, clotrimazole, butoconazole, fenticonasole, tioconazole, terconazole, sulconazole, fluconazole, haloprogin, ketonazole, ketoconazole, oxinazole, econazole, itraconazole, torbinafine, nystatin and griseofulvin;
(x) antibiotics such as erythromycin, clindamycin, synthomycin, tetracycline, metronidazole and the like;
(xi) anti-viral agents including famcyclovir, valacyclovir and acyclovir;
(xii) anti-parasitic agents such as scabicedes, such as permethrin, crotamiton, lindane and ivermectin;
(xiii) anti-infectious and anti-acne agents including benzoyl peroxide, sulfur, resorcinol and salicylic acid;
(xiv) enzymes and co-enzymes including co-enzyme Q10, papain enzyme, lipases, proteases, superoxide dismutase, fibrinolysin, desoxyribonuclease, trypsin, collagenase and sutilains;
(xv) anti-histamines including chlorpheniramine, brompheniramine, dexchlorpheniramine, tripolidine, clemastine, diphenhydramine, prometazine, piperazines, piperidines, astemizole, loratadine and terfonadine;
(xvi) chemotherapeutic agents such as 5-fluorouracil, masoprocol, mechlorethamine, cyclophosphamide, vincristine, chlorambucil, streptozocin, methotrexate, bleomycin, dactinomycin, daunorubicin, coxorubicin and tamoxifen; and

In addition to the active materials listed above, the products of this invention can also contain, for example, the following dyes, colorants or pigments: lactoflavin (riboflavin), beta-carotene, riboflavin-5'-phosphate, alpha-carotene, gamma-carotene, cantaxanthin, erythrosine, curcumin, quinoline yellow, yellow orange S, tartrazine, bixin, norbixin (annatto, orlean), capsanthin, capsorubin, lycopene, beta-apo-8'-carotenal, beta-apo-8'-carotenic acid ethyl ester, xantophylls (flavoxanthin, lutein, cryptoxanthin, rubixanthin, violaxanthin, rodoxanthin), fast carmine (carminic acid, cochineal), azorubin, cochineal red A (Ponceau 4 R), beetroot red, betanin, anthocyanins, amaranth, patent blue V, indigotine I (indigo-carmine), chlorophylls, copper compounds of chlorophylls, acid brilliant green BS (lissamine green), brilliant black BN, vegetable carbon, titanium dioxide, iron oxides and hydroxides, calcium carbonate, aluminum, silver, gold, pigment rubine BK (lithol rubine BK), methyl violet B, victoria blue R, victoria blue B, acilan brilliant blue FFR (brilliant wool blue FFR), naphthol green B, acilan fast green 10 G (alkali fast green 10 G), ceres yellow GRN, sudan blue II, ultramarine, phthalocyanine blue, phthalocayanine green, fast acid violet R. Further naturally obtained extracts (for example paprika extract, black carrot extract, red cabbage extract) can be used for coloring purposes. Goods results are also achieved with the colors named in the following, the so-called aluminum lakes: FD & C Yellow 5 Lake, FD & C Blue 2 Lake, FD & C Blue 1 Lake, Tartrazine Lake, Quinoline Yellow Lake, FD & C Yellow 6 Lake, FD & C Red 40 Lake, Sunset Yellow Lake, Carmoisine Lake, Amaranth Lake, Ponceau 4R Lake, Erythrosyne Lake, Red 2G Lake, Allura Red Lake, Patent Blue V Lake, Indigo Carmine Lake, Brilliant Blue Lake, Brown HT Lake, Black PN Lake, Green S Lake and mixtures thereof.

### Adjunct Materials

In addition to the active materials, the present invention also contemplates the incorporation of one or more adjunct materials including solvent, emollients, solubility modifiers, density modifiers, stabilizers, viscosity modifiers, pH modifiers, or any combination thereof. These modifiers can be present in the aqueous or oil phase.

The one or more adjunct material may be added in the amount of from 0.01% to 25% (e.g., from 0.5% to 10%) by weight of the flavor nanoemulsion.
(i) Solvent. Preferable solvent materials are hydrophobic and miscible with the active materials. Solvents increase the compatibility of various active materials, increase the overall hydrophobicity of the mixture containing the active materials, influence the vapor pressure, or serve to structure the mixture. It should be noted that selecting a solvent and active material with high affinity for each other will result in improvement in stability. Exemplary solvents are triglyceride oil, mono and diglycerides, mineral oil, silicone oil, diethyl phthalate, polyalpha olefins, castor oil, isopropyl myristate, mono-, di- and tri-esters and mixtures thereof, fatty acids, and glycerine. The fatty acid chain can range from C₄-C₂₆ and can have any level of unsaturation. For instance, one of the following solvents can be used: capric/caprylic triglyceride known as NEOBEE M5 (Stepan Corporation); the CAPMUL series by Abitec Corporation (e.g., CAPMUL MCM); isopropyl myristate; fatty acid esters of polyglycerol oligomers, e.g., R²CO-[OCH₂-CH(OCOR¹)-CH²O-]ₙ, where R¹ and R² can be H or C₄-C₂₆ aliphatic chains, or mixtures thereof, and n ranges between 2 and 50, preferably 2 and 30; nonionic fatty alcohol alkoxylates like the NEODOL surfactants by BASF; the dobanol surfactants by Shell Corporation or the BIO-SOFT surfactants by Stepan, wherein the alkoxy group is ethoxy, propoxy, butoxy, or mixtures thereof and said surfactants can be end-capped with methyl groups in order to increase their hydrophobicity; di- and tri-fatty acid chain containing nonionic, anionic and cationic surfactants, and mixtures thereof; fatty acid esters of polyethylene glycol, polypropylene glycol, and polybutylene glycol, or mixtures thereof; polyalphaolefins such as the EXXONMOBIL PURESYM PAO line; esters such as the EXXONMOBIL PURESYN esters; mineral oil; silicone oils such polydimethyl siloxane and polydimethylcyclosiloxane; diethyl phthalate; di-octyl adipate and di-isodecyl adipate. In certain embodiments, ester oils have at least one ester group in the molecule. One type of common ester oil useful in the present invention are the fatty acid mono and polyesters such as cetyl octanoate, octyl isonanoanate, myristyl lactate, cetyl lactate, isopropyl myristate, myristyl myristate, isopropyl palmitate, isopropyl adipate, butyl stearate, decyl oleate, cholesterol isostearate, glycerol monostearate, glycerol distearate, glycerol tristearate, alkyl lactate, alkyl citrate and alkyl tartrate; sucrose ester and polyesters, sorbitol ester, and the like. A second type of useful ester oil is predominantly composed of triglycerides and modified triglycerides. These include vegetable oils such as jojoba, soybean, canola, sunflower, safflower, rice bran, avocado, almond, olive, sesame, persic, castor, coconut, and mink oils. Synthetic triglycerides can also be employed provided they are liquid at room temperature. Modified triglycerides include materials such as ethoxylated and maleated triglyceride derivatives provided they are liquids. Proprietary ester blends such as those sold by FINETEX as FINSOLV are also suitable, as is ethylhexanoic acid glyceride. A third type of ester oil is liquid polyester formed from the reaction of a dicarboxylic acid and a diol. Examples of polyesters suitable for the present invention are the polyesters marketed by EXXONMOBIL under the trade name PURESYN ESTER.
(ii) Triglycerides and modified triglycerides as emollients. These include vegetable oils such as jojoba, soybean, canola, sunflower, safflower, rice bran, avocado, almond, olive, sesame, persic, castor, coconut, and mink oils.
(iii) Ester oils have at least one ester group in the molecule. One type of common ester oil useful in the present invention are the fatty acid mono and polyesters such as cetyl octanoate, octyl isonanoanate, myristyl lactate, cetyl lactate, isopropyl myristate, myristyl myristate, isopropyl palmitate, isopropyl adipate, butyl stearate, decyl oleate, cholesterol isostearate, glycerol monostearate, glycerol distearate, glycerol tristearate, alkyl lactate, alkyl citrate and alkyl tartrate.
(iv) Ester oil as a liquid polyester formed from the reaction of a dicarboxylic acid and a diol. Examples of polyesters suitable for the present invention are the polyesters marketed by ExxonMobil under the trade name PURESYN ESTER.RTM, hydrophobic plant extracts.
(v) Silicones include, for example, linear and cyclic polydimethylsiloxanes, amino-modified, alkyl, aryl, and alkylaryl silicone oil.
(vi) Low/non volatile hydrocarbons
(vii) Solubility modifiers. Nonlimiting examples of a solubility modifier include surfactants (e.g., SLS and Tween 80), acidic compounds (e.g., mineral acids such as sulfuric acid, hydrochloric acid, nitric acid, and phosphoric acid, and carboxylic acids such as acetic acid, citric acid, gluconic acid, glucoheptonic acid, and lactic acid), basic compounds (e.g., ammonia, alkali metal and alkaline earth metal hydroxides, primary, secondary, or tertiary amines, and primary, secondary, or tertiary alkanolamines), ethyl alcohol, glycerol, glucose, galactose, inositol, mannitol, glactitol, adonitol, arabitol, and amino acids.
(viii) Density modifiers. The density of the flavor oil droplets and the flavor nanoemulsion can be adjusted so that the nanoemulsion has a substantially uniform distribution using known density modifiers or technologies such as those described in Patent Application Publications WO 2000/059616, EP 1 502 646, and EP 2 204 155. Suitable density modifiers include hydrophobic materials and materials having a desired molecular weight (e.g., higher than about 12,000), such as silicone oils, petrolatums, vegetable oils, especially sunflower oil and rapeseed oil, and hydrophobic solvents having a desired density (e.g., less than about 1,000 Kg/m3 at 25°C, such as limonene and octane.
(ix) Stabilizers. In some embodiments, a stabilizer (e.g., a colloidal stabilizer) is added to stabilize the emulsion. Examples of colloidal stabilizers are polyvinyl alcohol, cellulose derivatives such hydroxyethyl cellulose, polyethylene oxide, copolymers of polyethylene oxide and polyethylene or polypropylene oxide, or copolymers of acrylamide and acrylic acid.
(x) Viscosity control agents. Viscosity control agents (e.g., suspending agents), which may be polymeric or colloidal (e.g., modified cellulose polymers such as methylcellulose, hydoxyethylcellulose, hydrophobically modified hydroxyethylcellulose, and cross-linked acrylate polymers such as Carbomer, hydrophobically modified polyethers) can be included in the flavor nanoemulsions. Optionally, silicas, either hydrophobic or hydrophilic, can be included at a concentration from 0.01 to 20 %, more preferable from 0.5 to 5%, by the weight of the flavor nanoemulsion. Examples of hydrophobic silicas include silanols, surfaces of which are treated with halogen silanes, alkoxysilanes, silazanes, and siloxanes, such as SIPERNAT D17, AEROSIL R972 and R974 available from Degussa. Exemplary hydrophilic silicas are AEROSIL 200, SIPERNAT 22S, SIPERNAT 50S (available from Degussa), and SYLOID 244 (available from Grace Davison).
(xi) pH modifiers. In some embodiments, one or more pH modifiers are included in the nanoemulsions to adjust the pH. Exemplary pH modifiers include metal hydroxides (e.g., LiOH, NaOH, KOH, and Mg(OH)2), metal carbonates and bicarbonates (CsCO3 Li2CO3, K2CO3, NaHCO3, and CaCO3), metal phosphates/hydrogen phosphates/dihydrogen phosphates, metal sulfates, ammonia, mineral acids (HCl, H2SO4, H3PO4, and HNO3), carboxylic acids (e.g., acetic acid, citric acid, lactic acid, benzoic acid, and sulfonic acids), and amino acids.

The level of the adjunct materials can be present at a level of 0.01 to 25% (e.g., from 0.5% to 10%) or greater than 10% (e.g., greater than 30% and greater than 70%).

Other modifications of this invention will be readily apparent to those skilled in the art. Such modifications are understood to be within the scope of this invention. In addition, all parts, percentages, proportions, and ratios typically refer to herein and in the claims are by weight unless otherwise specified.

All parts, percentages and proportions refer to herein and in the claims are by weight unless otherwise indicated.

The values and dimensions disclosed herein are not to be understood as being strictly limited to the exact numerical values recited. Instead, unless otherwise specified, each such value is intended to mean both the recited value and a functionally equivalent range surrounding that value. For example, a value disclosed as "50%" is intended to mean "about 50%."

All publications cited herein are incorporated by reference in their entirety.

The invention is described in greater detail by the following non-limiting examples.

### EXAMPLE 1

A flavor nanoemulsion of this invention, *i.e.,* Emulsion I, was prepared following the procedure described below.

An aqueous phase was obtained by dissolving 420 grams of sorbitol, 170 grams of glycerin, and 172 grams of propylene glycol in 180 grams of water, followed by adding 25 grams of Tween™ 60 (a polyethoxylated sorbitan fatty acid ester, commercially available from Croda, Edison, NJ) under high shear mixing using the Silverson high shear mixer, Model L4RT, (SILVERSON) at 6,500 rpm for 3 minutes. In a separate flask, an oil phase was prepared by mixing 3 grams standard fluid lecithin (HLB of about 4) and 30 grams of lemon flavor (International Flavors and Frances, Union Beach, NJ). Subsequently, a pre-emulsion was formed by mixing the oil and aqueous phases under high shear mixing at 6,500 rpm for 3 minutes. The pre-emulsion was further processed in a high-pressure microfluidizer (Model M-110P, Microfluidics, Westwood, MA) for three passes at 5,000 psi to obtain 1,000 grams of Emulsion I.

The water activity was measured using an AquaLab dew point water activity meter (Model 4TEV, Decagon Devices, Inc., Pullman, Washington, USA). Emulsion I had a water activity of 0.53.

### EXAMPLE 2

Another nanoemulsion of this invention, Emulsion II, was prepared following the same procedure as Emulsion I, except that 3 grams of enzyme modified lecithin SOLEC K-EML (commercially available from DuPont Nutrition & Health, St. Louis, MO, USA, HLB of about 8) was used instead of standard fluid lecithin.

### COMPARATIVE EMULSIONS

Comparative Emulsion I' was prepared following the same procedure as Emulsion I, except that no standard liquid lecithin was used and additional 3 grams of glycerin was added so that the total weight of the emulsion remained 1000 grams.

Comparative Emulsion II' was prepared following the same procedure as Emulsion I, except that (i) 24 grams of enzyme modified lecithin, ALCOLEC C LPC20 (America Lecithin Company, Oxford, CT, USA) was used instead of Tween™ 60, (ii) the amount of standard liquid lecithin was reduced to 2.4 grams, and (iii) the amount of glycerin was increased to 171.6 grams.

Comparative Emulsion III' was prepared following the same procedure as Emulsion I, except that (i) 35 grams of fractionated lecithin, ALCOLEC PC75 (America Lecithin Company, Oxford, CT, USA) was used instead of Tween™ 60, (ii) the amount of standard fluid lecithin was reduced to 2.4 grams, and (iii) the amount of glycerin was reduced to 160.6 grams.

### EXAMPLES 3 AND 4: alcoholic beverages

A beverage of this invention, *i.e.,* Beverage A, was prepared following the procedure described below. More specifically, 0.1% (wt/vol) of Emulsion I was added to an alcoholic beverage solution (8% alcohol), which was prepared by diluting an alcoholic syrup with water at a ratio of 1 : 3 ratio (syrup : water). The alcoholic syrup formula is given in Table 2 below.

**TABLE 2**

| Alcoholic Syrup | Weight (gram) |
|---|---|
| Water | 675.72 |
| 95% alcohol | 313.37 |
| Citric acid (granular) | 9.62 |
| Sodium citrate | 0.84 |
| Acesulfame K | 0.29 |
| Sucralose | 0.16 |

Turbidities of the drink were measured at time zero and after 1 day using a turbidimer (HACH Model 2100Q0) with the unit of Nephelometric Turbidity Units ("NTU") specified by United States Environment Protection Agency. The measurement was carried out following the procedure described in the "Turbidity Measurement" section of the Owner Instruction Manual of the turbidimeter. The results are shown in Table 3 below.

Beverage B was prepared following the same procedure as Beverage A except that Emulsion II was used instead of Emulsion I.

Comparative Beverages A', B', and B" were prepared using Comparative Emulsion I', II', and III', respectively.

The turbidity of Beverage B and Comparative Beverage A' were measured. The results are shown in Table 3 below.

**TABLE 3**

| Turbidity (NTU) | Beverage A | Beverage B | Comparative Beverage A' | Comparative Beverage B' | Comparative Beverage B" |
|---|---|---|---|---|---|
| Time 0 | 2.8 | 1.7 | 4.1 | 14.7 | 23.6 |
| After 1 day | 0.8 | 0.5 | 1.3 | 8.7 | 15.2 |

As shown in Table 3 above, each of Beverages A and B of this invention, unexpectedly, has a turbidity much lower either at time zero or after one day than the comparatives.

### EXAMPLES 5 and 6: nonalcoholic beverages

A beverage of this invention, *i.e.,* Beverage C, was prepared following the procedure described below. More specifically, 0.1% (wt/vol) of Emulsion I was mixed with a non-alcoholic beverage solution, which was prepared with the formulation shown in Table 4 below.

Turbidities of the Beverage H were measured at zero time and after 1 day.

**TABLE 4**

| Ingredient | g/L |
|---|---|
| Emulsion | 1 |
| Sugar syrup 67° Brix | 150 |
| Citric acid 50% solution | 3 |
| Water | q.s. to 1 L |

Beverage D of this invention was prepared following the same procedure as Beverage C except that Emulsion II was used instead of Emulsion I.

Comparative Beverage C' was prepared following the same procedure as Beverage C except that Comparative Emulsion I' was used instead of Emulsion III.

Turbidities of Beverage D and Comparative Beverage C' were measured and shown in Table 5 below.

**TABLE 5**

| Turbidity (NTU) of final drink | Beverage C | Beverage D | Comparative Beverage C' |
|---|---|---|---|
| Time 0 | 1.6 | 1.9 | 4.1 |
| After 1 day | 0.9 | 1.4 | 1.1 |

### EXAMPLES 7-10: Emulsions with different Tween™ 60 levels

Emulsion III of this invention was prepared following the same procedure as Emulsion II, except that 3 grams (instead of 25 grams) of Tween™ 60 was used. The ratio between polyethoxylated sorbitan fatty acid ester Tween™ 60 and lecithin was 1 : 1, and the ratio between the polyethoxylated sorbitan fatty acid ester to the flavor oil at 1 : 10. The amount of glycerin was increased accordingly to maintain the final product weight of 1000 grams.

Emulsion IV of this invention was prepared following the same procedure as Emulsion II, except that 6 grams (instead of 25 grams) of Tween™ 60 was used. The ratio between polyethoxylated sorbitan fatty acid ester Tween™ 60 and lecithin was 2 : 1, and the ratio between the polyethoxylated sorbitan fatty acid ester to the flavor oil at 1 : 5. The amount of glycerin was increased accordingly to maintain the final product weight of 1000 grams.

Emulsion V of this invention was prepared following the same procedure as Emulsion II, except that 30 grams (instead of 25 grams) of Tween™ 60 was used. The ratio between polyethoxylated sorbitan fatty acid ester Tween™ 60 and lecithin was 10 : 1, and the ratio between the polyethoxylated sorbitan fatty acid ester to the flavor oil at 1 : 1. The amount of glycerin was decreased accordingly to maintain the final product weight of 1000 grams.

Emulsion VI of this invention was prepared following the same procedure as Emulsion II, except that 60 grams (instead of 25 grams) of Tween™ 60 was used. The ratio between polyethoxylated sorbitan fatty acid ester Tween™ 60 and lecithin was 20 : 1, and the ratio between the polyethoxylated sorbitan fatty acid ester to the flavor oil at 2 : 1. The amount of glycerin was decreased accordingly to maintain the final product weight of 1000 grams.

### EXAMPLES 11-14: Alcoholic beverages

Beverages E, F, G, and H of this invention were prepared using Emulsion III, IV, V, and VI, respectively, following the procedure described in Example 3 above except that different emulsions were used.

The turbidities of these four beverages were measured. The results were summarized in Table 6 below with Beverage B described in Example 4 above.

**TABLE 6**

| Turbidity (NTU) | Beverage E | Beverage F | Beverage B | Beverage G | Beverage H |
|---|---|---|---|---|---|
| Time 0 | 5.8 | 2.0 | 1.7 | 2.7 | 1.7 |
| After 1 day | 1.9 | 1.2 | 0.5 | 0.6 | 0.8 |

As shown in Table 6, Beverages B and E-H, unexpectedly, had a turbidity of less than 2 NTU after being stored for one day. Note that in these five beverage, the ratio between the polyethoxylated sorbitan fatty acid ester and lecithin was in the range of 1 :1 to 20 : 1.

### EXAMPLES 15-17: Emulsions containing two polyethoxylated sorbitan fatty acid esters

Emulsion VII of this invention was prepared following the same procedure as Emulsion II, except that (i) 12.5 grams of Tween™ 60 and 12.5 grams of Tween™ 80 were used instead of 25 grams of Tween™ 60.

Emulsion VIII of this invention was prepared following the same procedure as Emulsion II, except that (i) 12.5 grams of Tween™ 60 and 12.5 grams of Tween™ 20 were used instead of 25 grams of Tween™ 60.

Emulsion IX of this invention was prepared following the same procedure as Emulsion II, except that (i) 12.5 grams of Tween™ 20 and 12.5 grams of Tween™ 80 were used instead of 25 grams of Tween™ 60 and (ii) the amount of glycerin.

### EXAMPLES 18-20: Alcoholic beverages prepared from Emulsions VII to IX

Beverages J, K, and L of this invention were prepared using Emulsion VII, VIII, and IX, respectively following the procedure described in Example 4 above. The turbidities of these three beverages were measured. The results are shown in Table 7 below along with Beverage B.

**TABLE 7**

| Turbidity (NTU) of final drink | Beverage B | Beverage J | Beverage K | Beverage L |
|---|---|---|---|---|
| Time 0 | 1.7 | 2 | 1.9 | 1.9 |
| After 1 day | 0.5 | 0.7 | 0.4 | 0.5 |

As shown in Table 7 above, the four beverages each had a turbidity of less than 2 NTU both at time 0 and after 1 day.

### EXAMPLES 21-22: Emulsions with antifoamers

Emulsion X of this invention was prepared following the same procedure as Emulsion II, except that 30 grams of water-dispersable antifoamer HI MAR S-010 FG K (10% silcone emulsion, Hi-Mar Specialty Chemicals, L.L.C., Milwaukee, WI, USA) was added in the aqueous phase after high-shear mixing but prior to the high-pressure homoginization. The amount of glycerin was reduced by 30 grams.

Emulsion XI of this invention was prepared following the same procedure as Emulsion II, except that 5 grams of oil-soluble antifoamer XIAMETER ACP-1500 (Dow Corning Corporation, Auburn, MI, USA) was added in the flavor oil phase prior to high-shear mixing. The amount of glycerin was reduced by 5 grams. The pre-emulsion was further processed in a high-pressure homogenization for three passes at 7,000 psi.

### EXAMPLES 23-24: Non-alcoholic beverages prepared from Emulsion X and XI

Beverages M and N of this invention were prepared using Emulsion X and XI, respectively, following the same procedure as Beverage C except that different emulsions were used. Turbidities of Beverage S and Beverage T were measured and are shown in Table 8 below.

**TABLE 8**

| Turbidity (NTU) | Beverage M | Beverage N |
|---|---|---|
| Time 0 | 1.4 | 1.2 |
| After 1 day | 0.8 | 0.7 |

### EXAMPLES 25 and 26: Stability examples

Emulsion XII of this invention was prepared following the same procedure as Emulsion I, except that (i) 17 grams of Tween™ 80 instead of 25 grams of Tween™ 60 were used and (ii) the amount of glycerin was increased to 250 grams and (iii) the amount of propylene glycol was reduced to 100 grams.

Emulsion XII had a water activity of 0.53 as measured with an AquaLab dew point water activity meter.

Beverage O of this invention was prepared following the same procedure as Beverage C except that Emulsion XII was used instead of Emulsion I.

Comparative Emulsion XII was prepared following the same procedure as Emulsion I, except that 15 grams of sucrose monopalmitate P90 (Commercially available from Compass Foods, Singapore) was used instead of Tween™ 60 and (ii) the amount of glycerin was increased to 252 grams and (iii) the amount of propylene glycol was reduced to 100 grams.

Comparative Beverage O' was prepared following the same procedure as Beverage C except that Comparative Emulsion XII was used instead of Emulsion I.

Beverage O and Comparative Beverage O' were tasted for stability. The results showed that Beverage O was unexpectedly stable for 16 weeks when being stored at 37 °C, which is equivalent to the storage for 16 months at room temperature. By contrast, Comparative Beverage O' became unstable after 6 weeks when being stored at 37 °C.

### OTHER EMBODIMENTS

All of the features disclosed in this specification may be combined in any combination. Each feature disclosed in this specification may be replaced by an alternative feature serving the same, equivalent, or similar purpose. Thus, unless expressly stated otherwise, each feature disclosed is only an example of a generic series of equivalent or similar features.

Indeed, to prepare a flavor nanoemulsion, one skilled in the art can choose different flavors, solvents, contents and ratios of polyethoxylated sorbitan fatty acid esters and lecithins, co-solvents, and the load of flavors in beverages. Further, a skilled person can also choose other adjunct materials and suitable stabilizing agents.

From the above description, a skilled artisan can easily ascertain the essential characteristics of the present invention, and without departing from the spirit and scope thereof, can make various changes and modifications of the invention to adapt it to various usages and conditions. Thus, other embodiments are also within the claims.

## Claims

1. A flavor nanoemulsion comprising a plurality of oil droplets, an aqueous phase, and a surfactant system, said nanoemulsion having a water activity of 0.7 or less, and a water content of 25% or less by weight,
wherein,
each of the oil droplets, having a droplet size of 0.1 to 500 nm, contains a flavor and disperses in the aqueous phase,
the aqueous phase contains water and a co-solvent,
the surfactant system includes a polyethoxylated sorbitan fatty acid ester and a lecithin, the polyethoxylated sorbitan fatty acid ester has an HLB of 9 to 20,
the lecithin has an HLB of 4 to 16, and
the weight ratio of the polyethoxylated sorbitan fatty acid ester and the flavor is in the range of 1 : 15 to 3 : 1.

2. The flavor nanoemulsion of claim 1, wherein the surfactant system is present at a level of 0.1 to 20% and the flavor is present at a level of 1 to 20%.

3. The flavor nanoemulsion of claim 1 or 2, wherein the polyethoxylated sorbitan fatty acid ester is polyoxyethylene sorbitan monolaurate, polyoxyethylene sorbitan monopalmitate, polyoxyethylene sorbitan monostearate, polyoxyethylene sorbitan monooleate, or a combination thereof; and/or the lecithin is native, deoiled, fractionated, or enzyme-modified.

4. The flavor nanoemulsion of any one of claims 1-3, wherein the weight ratio between the polyethoxylated sorbitan fatty acid ester and the lecithin is 30 : 1 to 1 : 5, the polyethoxylated sorbitan fatty acid ester is present at a level of 0.05 to 15%, and the lecithin is present at a level of 0.05 to 5%.

5. The flavor nanoemulsion of any one of claims 1-4, wherein the co-solvent is a polyol, and the weight ratio between water and the polyol is 1 : 95 to 1 : 3, or preferably 1 : 20 to 1 : 5.

6. The flavor nanoemulsion of claim 5, wherein the polyol is propylene glycol, 1.3-propandiol, glycerin, butylene glycol, erythritol, xylitol, mannitol, sorbitol, isomalt, or a combination thereof.

7. The flavor nanoemulsion of claim 6, wherein the polyol is a mixture of propylene glycol, glycerin, and sorbitol, propylene glycol is present at a level of 5 to 25%, glycerin is present at a level of 0.1 to 35%, and sorbitol is present at a level of 25 to 65%.

8. The flavor nanoemulsion of any one of claims 1-7, further comprising a defoamer, preferably selected from the group consisting of a silicone emulsion antifoamer, polydimethylsiloxane antifoamer, 2-octanol, petrolatum, hop lipid, alginate, mineral oil, sobitan monostearate, and combinations thereof.

9. The flavor nanoemulsion of any one of claims 1-8, wherein the nanoemulsion contains water 20% or less, and more preferably 15% or less, the water activity is 0.65 or less, or preferably 0.6 or less.

10. The flavor nanoemulsion of any one of claims 1-9, wherein the oil droplets each further contain an oil-soluble vitamin, an oil-soluble colorant, an antioxidant, a taste modulator, a mouthfeel modulator, or a combination thereof.

11. The flavor nanoemulsion of claim 10, wherein the taste modulator is an acid masker, cooling agent, hot tasting, sweet enhancer, salt enhancer, salivation-inducing substance, substance causing a warmth or tingling feeling, or a combination thereof.

12. A liquid beverage or liquid beverage concentrate comprising the flavor nanoemulsion of any one of claims 1-11, wherein the liquid beverage or liquid beverage concentrate has a turbidity of 10 NTU or less.

13. The liquid beverage or liquid beverage concentrate of claim 12, further comprising alcohol.

14. A method of preparing a nanoemulsion of any one of claims 1-11, the method comprising the steps of:
(a) providing an aqueous phase containing a polyethoxylated sorbitan fatty acid ester, water, and a co-solvent,
(b) providing an oil phase containing a flavor and a lecithin, and
(c) emulsifying the oil phase into the aqueous phase, thereby obtaining the nanoemulsion,
wherein the polyethoxylated sorbitan fatty acid ester has an HLB of 9 to 20, and the lecithin has an HLB of 4 to 16, and the weight ratio of the polyethoxylated sorbitan fatty acid ester and the flavor is in the range of 1 : 15 to 3 : 1.

## Patentansprüche

1. Geschmacksnanoemulsion, umfassend eine Vielzahl von Öltröpfchen, eine wässrige Phase und ein Tensidsystem, wobei die Nanoemulsion eine Wasseraktivität von 0,7 oder weniger und einen Wassergehalt von 25 Gew.-% oder weniger aufweist,
wobei
die Öltröpfchen jeweils eine Tröpfchengröße von 0,1 bis 500 nm aufweisen, einen Geschmacksstoff enthalten und in der wässrigen Phase dispergieren,
die wässrige Phase Wasser und ein Co-Lösungsmittel enthält,
das Tensidsystem einen polyethoxylierten Sorbitanfettsäureester und ein Lecithin beinhaltet,
der polyethoxylierte Sorbitanfettsäureester einen HLB-Wert von 9 bis 20 aufweist,
das Lecithin einen HLB-Wert von 4 bis 16 aufweist und das Gewichtsverhältnis des polyethoxylierten Sorbitanfettsäureesters und des Geschmacksstoffs im Bereich von 1:15 bis 3:1 liegt.

2. Geschmacksnanoemulsion nach Anspruch 1, wobei das Tensidsystem in einer Menge von 0,1 bis 20 % vorliegt und der Geschmacksstoff in einer Menge von 1 bis 20 % vorliegt.

3. Geschmacksnanoemulsion nach Anspruch 1 oder 2, wobei es sich bei dem polyethoxylierten Sorbitanfettsäureester um Polyoxyethylensorbitanmonolaurat, Polyoxyethylensorbitanmonopalmitat, Polyoxyethylensorbitanmonostearat, Polyoxyethylensorbitanmonooleat oder eine Kombination davon handelt; und/oder das Lecithin nativ, entölt, fraktioniert oder enzymmodifiziert ist.

4. Geschmacksnanoemulsion nach einem der Ansprüche 1-3, wobei das Gewichtsverhältnis zwischen dem polyethoxylierten Sorbitanfettsäureester und dem Lecithin bei 30:1 bis 1:5 liegt, der polyethoxylierte Sorbitanfettsäureester in einer Menge von 0,05 bis 15 % vorliegt und das Lecithin in einer Menge von 0,05 bis 5 % vorliegt.

5. Geschmacksnanoemulsion nach einem der Ansprüche 1-4, wobei es sich bei dem Co-Lösungsmittel um ein Polyol handelt und das Gewichtsverhältnis zwischen Wasser und dem Polyol bei 1:95 bis 1:3 oder vorzugsweise bei 1:20 bis 1:5 liegt.

6. Geschmacksnanoemulsion nach Anspruch 5, wobei es sich bei dem Polyol um Propylenglycol, 1.3-Propandiol, Glycerin, Butylenglycol, Erythrit, Xylit, Mannit, Sorbit, Isomalt oder eine Kombination davon handelt.

7. Geschmacksnanoemulsion nach Anspruch 6, wobei es sich bei dem Polyol um ein Gemisch von Propylenglycol, Glycerin und Sorbit handelt, Propylenglycol in einer Menge von 5 bis 25 % vorliegt, Glycerin in einer Menge von 0,1 bis 35 % vorliegt und Sorbit in einer Menge von 25 bis 65 % vorliegt.

8. Geschmacksnanoemulsion nach einem der Ansprüche 1-7, ferner umfassend einen Entschäumer, vorzugsweise ausgewählt aus der Gruppe bestehend aus einem Silikonemulsionsantischaummittel, Polydimethylsiloxanantischaummittel, 2-Octanol, Vaseline, Hopfenlipid, Alginat, Mineralöl, Sobitanmonostearat und Kombinationen davon.

9. Geschmacksnanoemulsion nach einem der Ansprüche 1-8, wobei die Nanoemulsion Wasser zu 20 % oder weniger enthält, und besonders bevorzugt zu 15 % oder weniger, die Wasseraktivität bei 0,65 oder weniger liegt, oder vorzugsweise bei 0,6 oder weniger.

10. Geschmacksnanoemulsion nach einem der Ansprüche 1-9, wobei die Öltröpfchen ferner jeweils ein öllösliches Vitamin, einen öllöslichen Farbstoff, ein Antioxidans, einen Geschmacksmodulator, einen Mundgefühlmodulator oder eine Kombination davon enthalten.

11. Geschmacksnanoemulsion nach Anspruch 10, wobei es sich bei dem Geschmacksmodulator um einen Säuremaskierer, ein kühlendes Mittel, einen scharf schmeckenden Stoff, einen Verstärker von süßem Geschmack, einen Verstärker von salzigem Geschmack, einen die Speichelbildung anregenden Stoff, einen Stoff, der eine Wärme oder ein prickelndes Gefühl hervorruft, oder eine Kombination davon.

12. Flüssiges Getränk oder flüssiges Getränkekonzentrat, umfassend die Geschmacksnanoemulsion nach einem der Ansprüche 1-11, wobei das flüssige Getränk oder das flüssige Getränkekonzentrat eine Trübung von 10 NTU oder weniger aufweist.

13. Flüssiges Getränk oder flüssiges Getränkekonzentrat nach Anspruch 12, ferner umfassend Alkohol.

14. Verfahren zur Herstellung einer Nanoemulsion nach einem der Ansprüche 1-11, wobei das Verfahren folgende Schritte umfasst:
(a) Bereitstellen einer wässrigen Phase, die einen polyethoxylierten Sorbitanfettsäureester, Wasser und ein Co-Lösungsmittel enthält,
(b) Bereitstellen einer Ölphase, die einen Geschmacksstoff und ein Lecithin enthält, und
(c) Emulgieren der Ölphase in die wässrige Phase, wodurch die Nanoemulsion erhalten wird, wobei der polyethoxylierte Sorbitanfettsäureester einen HLB-Wert von 9 bis 20 aufweist und das Lecithin einen HLB-Wert von 4 bis 16 aufweist und das Gewichtsverhältnis des polyethoxylierten Sorbitanfettsäureesters und des Geschmacksstoffs im Bereich von 1:15 bis 3:1 liegt.

## Revendications

1. Nano-émulsion d'arôme comprenant une pluralité de gouttelettes d'huile, une phase aqueuse, et un système d'agents tensioactifs, ladite nano-émulsion ayant une activité de l'eau de 0,7 ou moins, et une teneur en eau de 25% en poids ou moins,
dans laquelle
chacune parmi les gouttelettes d'huile, ayant une taille de gouttelette allant de 0,1 à 500 nm, contient un arôme et se disperse dans la phase aqueuse,
la phase aqueuse contient de l'eau et un co-solvant, le système d'agents tensioactifs comporte un ester d'acide gras et de sorbitane polyéthoxylé et une lécithine,
l'ester d'acide gras et de sorbitane polyéthoxylé possède un rapport hydro-lipophile allant de 9 à 20,
la lécithine possède un rapport hydro-lipophile allant de 4 à 16, et
le rapport pondéral de l'ester d'acide gras et de sorbitane polyéthoxylé à l'arôme se trouve dans la plage allant de 1:15 à 3:1.

2. Nano-émulsion d'arôme selon la revendication 1, dans laquelle le système d'agents tensioactifs est présent selon un taux allant de 0,1 à 20% et l'arôme est présent selon un taux allant de 1 à 20%.

3. Nano-émulsion d'arôme selon la revendication 1 ou 2, dans laquelle l'ester d'acide gras et de sorbitane polyéthoxylé est le monolaurate de sorbitane polyoxyéthyléné, le monopalmitate de sorbitane polyoxyéthyléné, le monostéarate de sorbitane polyoxyéthyléné, le monooléate de sorbitane polyoxyéthyléné, ou une combinaison de ceux-ci ; et/ou la lécithine est native, délipidée, fractionnée ou modifiée enzymatiquement.

4. Nano-émulsion d'arôme selon l'une quelconque des revendications 1-3, dans laquelle le rapport pondéral de l'ester d'acide gras et de sorbitane polyéthoxylé à la lécithine va de 30:1 à 1:5, l'ester d'acide gras et de sorbitane polyéthoxylé est présent selon un taux allant de 0,05 à 15%, et la lécithine est présente selon un taux allant de 0,05 à 5%.

5. Nano-émulsion d'arôme selon l'une quelconque des revendications 1-4, dans laquelle le co-solvant est un polyol, et le rapport pondéral de l'eau au polyol va de 1:95 à 1:3, ou préférablement de 1:20 à 1:5.

6. Nano-émulsion d'arôme selon la revendication 5, dans laquelle le polyol est le propylène glycol, le 1,3-propanediol, le glycérol, le butylène glycol, l'érythritol, le xylitol, le mannitol, le sorbitol, l'isomalt, ou une combinaison de ceux-ci.

7. Nano-émulsion d'arôme selon la revendication 6, dans laquelle le polyol est un mélange de propylène glycol, de glycérol, et de sorbitol, le propylène glycol est présent selon un taux allant de 5 à 25%, le glycérol est présent selon un taux allant de 0,1 à 35%, et le sorbitol est présent selon un taux allant de 25 à 65%.

8. Nano-émulsion d'arôme selon l'une quelconque des revendications 1-7, comprenant en outre un agent antimousse, choisi de préférence dans le groupe constitué par un agent antimousse à base d'une émulsion de silicone, un agent antimousse à base de polydiméthylsiloxane, le 2-octanol, le pétrolatum, les lipides de houblon, les alginates, l'huile minérale, le monostéarate de sorbitane, et des combinaisons de ceux-ci.

9. Nano-émulsion d'arôme selon l'une quelconque des revendications 1-8, la nano-émulsion contenant de l'eau, 20% ou moins, et plus préférablement 15% ou moins, l'activité de l'eau étant de 0,65 ou moins, ou préférablement de 0,6 ou moins.

10. Nano-émulsion d'arôme selon l'une quelconque des revendications 1-9, dans laquelle les gouttelettes d'huile contiennent en outre chacune une vitamine liposoluble, un colorant liposoluble, un antioxydant, un modulateur du goût, un modulateur de la sensation en bouche, ou une combinaison de ceux-ci.

11. Nano-émulsion d'arôme selon la revendication 10, dans laquelle le modulateur du goût est un agent de masquage d'acide, un agent rafraîchissant, un goût épicé, un exhausteur de goût sucré, un exhausteur de goût salé, une substance induisant la salivation, une substance induisant une sensation de chaleur ou de piquant, ou une combinaison de ceux-ci.

12. Boisson liquide ou concentré de boisson liquide comprenant la nano-émulsion d'arôme selon l'une quelconque des revendications 1-11, la boisson liquide ou le concentré de boisson liquide présentant une turbidité de 10 NTU ou moins.

13. Boisson liquide ou concentré de boisson liquide selon la revendication 12, comprenant en outre de l'alcool.

14. Méthode de préparation d'une nano-émulsion selon l'une quelconque des revendications 1-11, la méthode comprenant les étapes consistant à :
(a) mettre à disposition une phase aqueuse contenant un ester d'acide gras et de sorbitane polyéthoxylé, de l'eau, et un co-solvant,
(b) mettre à disposition une phase huileuse contenant un arôme et une lécithine, et
(c) émulsifier la phase huileuse dans la phase aqueuse, afin d'obtenir ainsi la nano-émulsion,
où l'ester d'acide gras et de sorbitane polyéthoxylé possède un rapport hydro-lipophile allant de 9 à 20, et la lécithine possède un rapport hydro-lipophile allant de 4 à 16, et le rapport pondéral de l'ester d'acide gras et de sorbitane polyéthoxylé à l'arôme se trouve dans la plage allant de 1:15 à 3:1.
